# EUROPÄISCHE PATENTSCHRIFT

(11) **EP 1 114 430 B1**
(45) Veröffentlichungstag und Bekanntmachung des Hinweises auf die Patenterteilung: **18.01.2006**
(21) Anmeldenummer: 99946068.6
(22) Anmeldetag: 30.08.1999
(51) Int. Cl.: H01G 9/042, H01G 9/15, H01G 9/012

(54) **PASTE ZUR HERSTELLUNG VON GESINTERTEN REFRAKTÄRMETALLSCHICHTEN, INSBESONDERE ERDSÄUREMETALL-ELEKTROLYTKONDENSATOREN ODER -ANODEN**
PASTE FOR PRODUCING SINTERED REFRACTORY METAL LAYERS, NOTABLY EARTH ACID METAL ELECTROLYTIC CAPACITORS OR ANODES
PATE DESTINEE A LA PRODUCTION DE COUCHES METALLIQUES REFRACTAIRES FRITTEES, NOTAMMENT DE CONDENSATEURS ELECTROLYTIQUES OU D'ANODES EN METAL ACIDO-TERREUX

(30) Priorität: 10.09.1998 DE 19841352; 18.06.1999 DE 19927909
(43) Veröffentlichungstag der Anmeldung: 11.07.2001
(60) Teilanmeldung: 01116722.8
(73) Patentinhaber: H.C. Starck GmbH, 38642 Goslar (DE)
(72) Erfinder: LÖFFELHOLZ, Josua, D-38685 Langelsheim (DE); GOTTSCHLING, Marianne, D-38640 Goslar (DE); BINNER, Karsten, D-38642 Goslar (DE)
(74) Vertreter: Zobel, Manfred
(86) Internationale Anmeldenummer: PCT/EP1999/006379
(87) Internationale Veröffentlichungsnummer: WO 2000/016353

(56) Entgegenhaltungen:
- US-A- 3 579 813
- US-A- 3 903 589

## Beschreibung

Die vorliegende Erfindung betrifft ein Verfahren zur Herstellung von Elektrolytkondensatorelektroden aus Tantal, Niob oder deren Legierungen. Die Erfindung betrifft insbesondere ein Verfahren zum drucklosen Herstellen von Tantal- und/oder Niobkondensatorelektroden bei dem eine Paste zur Herstellung von Sinterbeschichtungen aus Refraktärmetallpulvern eingesetzt wird. Insbesondere betrifft die Erfindung auch ein Verfahren zur Herstellung neuartiger Elektroden und Kondensatoren mittels Pasten. Ferner betrifft die Erfindung neuartige Kondensatorelektroden mit flächigem Träger.

Tantalkondensatoren bestehen aus einer auf einen einerseits als elektrischer Kontakt und andererseits als Träger dienenden Tantaldraht aufgebrachten porösen Sinterschicht aus voragglomeriertem Tantalpulver, das mit einer dielektrischen Isolierschicht, der Oxidschicht, überzogen ist. Die Gegenelektrode wird durch einen flüssigen, pastösen oder festen Elektrolyten gebildet. Die hohe spezifische Kapazität derartiger Kondensatoren beruht auf der durch die Porosität der Sinterschicht bereitgestellten großen Fläche des Dielektrikums. Die Herstellung der Sinterschicht erfolgt durch Pressen und Sintern des rieselfähigen Pulvers. Ebenso wird bei der Herstellung von Niobkondensatoren verfahren.

Es ist einerseits klar, daß das Preßverfahren durch Einstecken des Kontaktdrahtes in die Preßform, Einfüllen des rieselfähigen Pulvers in den Spalt zwischen Kontaktdraht und Preßform, Verdichten des Pulvers usw., ein aufwendiges Verfahren ist. Darüber hinaus läßt dieses Verfahren nur begrenzte Formen und Dimensionen zu. Gemäß US-A-3 903 589 wird ein Tantaldraht durch eintanden in eine Aufschlämmung von Tantalpulver in Ethylenglykol beschichtet, getrocknet und auschließend gesintert.

Andererseits erlauben Pastenauftragsverfahren ein druckloses Sintern und nahezu beliebige Formen und Dimensionen des Kondensatordesigns, insbesondere auch die Herstellung dünnflächiger Anoden.

Ein Problem der Entwicklung immer feinerer Erdsäuremetallpulver zur Erzielung von höheren spezifischen Kapazitäten ist die damit steigende Stromdichte im Sinterkörper in der Umgebung des Trägerdrahtes, die zu einer Überhitzung mit spontaner Reaktion der MnO₂-Gegenelektrod mit der Sinteranode führen kann (Abbrennen des Erdsäuremetallpulvers). Durch eine flächige Ausbildung des Sinterkörpers würden sowohl die Stromdichten reduziert als auch eine bessere Wärmeableitung gewährleistet. Kammartige Anoden aus Tanfalblech mit aufgeschweißtem Anodenkörper aus gesintertem Tantalpulver sind aus US-A- 3 579 813 bekannt.

Demgemäß wäre ein Verfahren, das ein Sintern nach Auftragen einer Paste auf den Kontaktdraht bzw. ein Kontaktblech erlaubt, mit erheblichen technischen Vorteilen bei erheblich geringerem technischen Aufwand verbunden. Trotz dieser offensichtlichen Vorteile, die ein solches Verfahren bieten würde, sind bisher keinerlei Vorschläge für ein solches Verfahren bekannt geworden oder in die Technik eingeführt worden. Der Grund kann darin gesehen werden, daß bisher keine Pasten bekannt geworden sind, die die vielfältigen komplexen Anforderungen der Kondensatorherstellung erfüllen. Das zu lösende Problem besteht darin, eine kontinuierliche Phase für die Paste zu finden, die die äußerst empfindliche Oberfläche des Tantal- bzw. Niobpulvers nicht beeinflußt, insbesondere vor und während des Sintems rückstandsfrei aus der Sinterschicht entfernt wird und dennoch die für den Pastenauftrag auf das Substrat erforderlichen rheologischen Eigenschaften vermittelt, der aufgetragenen pastösen Schicht eine ausreichende Stabilität verleiht und ferner ohne Störung des Gefüges der Tantalpulverschicht aus dieser entfernt werden kann.

Zahlreiche Versuche haben gezeigt, daß Pasten, deren kontinuierliche Phase auf Basis von Wasser oder niedrigsiedenden organischen Lösungsmitteln aufgebaut ist, keine ausreichende Stabilität des Pulvergefüges bieten. Sie trocknen bereits bei Raumtemperatur oder bei erhöhter Temperatur unter Blasenbildung bis zum Aufschäumen. Anorganische oder mineralische rheologische Modifizierungsmittel scheiden wegen der Kontamination der Tantaloberfläche mit anorganischen Rückständen aus. Ebenso zu vermeiden ist die Kontamination mit Kohlenstoff, der sich aus Rückständen von organischen Bestandteilen der kontinuierlichen Phase bildet.

Es wurde nun gefunden, daß Pasten, deren kontinuierliche Phase gegebenenfalls nach Verdampfen eines niedrigsiedenden Lösungsmittels im wesentlichen aus organischen Substanzen besteht, die nur aus Kohlenstoff, Sauerstoff und Wasserstoff aufgebaut sind und bei denen das Verhältnis der Anzahl an Sauerstoffatomen zu Kohlenstoffatomen mindestens 0,5, bevorzugt mindestens 2/3, weiter bevorzugt mindestens 0,8 und insbesondere bevorzugt 1, beträgt, nach dem Sintern im Hochvakuum keine störenden Kohlenstoffrückstände hinterlassen. Derartige Pasten erlauben die Herstellung flächiger Erdsäuremetallkondensatoren.

Gegenstand der Erfindung sind ein Verfahren zur Herstellung von Anoden für Elektrolytkondensatoren mit dem in Anspruch 1 genannten Merkmalen sowie dadurch erhältliche Anoden, die durch die in Anspruch 6 genannten Merkmale definiert sind. Derartige Anoden auf Basis gesinterter Erdsäuremetallpulver bestehen aus einem als elektrischer Kontakt ausgebildeten metallischen Träger und einem die Kondensatorfläche darstellenden, mit dem Träger verbundenen porösen Sinterkörper, wobei der Träger in Form eines Bleches ausgebildet ist.

Es lassen sich auch Elektrolytkondensatoren mit gesinterter Erdsäuremetallpulver-Anode, die flächig ausgebildet sind, d.h. deren geometrische Ausdehnung in zwei Dimensionen größer ist als in der dritten Dimension, herstelten

Vorzugsweise sind die erfindungsgemäßen Anoden so ausgebildet, daß das Trägerblech den Sinterkörper in mindestens einer Richtung überragt. Hierdurch wird eine weiter verbesserte Wärmeableitung erzielt und die elektrische Kontaktierung vereinfacht.

Erfindungsgemäß kann das Trägerblech, das vorzugsweise aus Nb oder Ta besteht, ein Länge-zu-Breite-Verhältnis von 3:1 bis 10:1 oder mehr aufweisen, wobei eine Teilfläche von 0,5 bis 100 mm², vorzugsweise 2 bis 40 mm² des Trägerbleches ein- oder beidseitig mit dem Sinterkörper versehen ist.

Das Trägerblech kann eine Dicke von 30 bis 500 µm, vorzugsweise 40 bis 300 µm, insbesondere bevorzugt 60 bis 150 µm, aufweisen. Der darauf aufgesinterte Sinterkörper kann eine Dicke von 20 bis 2000 µm, vorzugsweise mehr als 100 µm, insbesondere bevorzugt 300 bis 1000 µm, aufweisen.

Eine Paste, die sich zur Herstellung der gesinterten Refraktärmetallschichten verwenden läßt, besteht aus 40 bis 92 Gew.% eines Refraktärmetallpulvers als diskrete Phase, und einer kontinuierlichen Phase, die im wesentlichen nur aus Kohlenstoff, Sauerstoff und Wasserstoff aufgebauten organischen Verbindungen, wobei das Verhältnis der Anzahl von Sauerstoffatomen zu Kohlenstoffatomen mindestens 1/2 beträgt, sowie gegebenenfalls einem unter 100°C verdampfenden Lösungsmittel besteht. Bevorzugt beträgt die Menge des Refraktärmetallpulvers 10 bis 50 Volumen-% der Paste.

Obwohl die Erfindung nachfolgend am Beispiel des Tantals beschrieben wird, ist sie entsprechend auch für Niob und andere Refraktärmetalle wie Molybdän, Wolfram sowie Legierungsmetalle einsetzbar.

Bevorzugt werden als organische Verbindungen bei Raumtemperatur flüssige Verbindungen eingesetzt. In diesem Falle ist die kontinuierliche Phase bevorzugt im übrigen lösungsmittelfrei. Als flüssige organische Verbindungen geeignet sind Ethylenglykol, Diethylenglykol, Tri- und Tetraethylenglycol sowie deren Ester, Glycerin, Glycerin-monoacetat, Glycerin-diacetat, Glycerin-triacetat, Dioxyaceton, Propandiol oder auch deren Mischungen. Weiter bevorzugt enthält die kontinuierliche Phase zusätzlich ein organisches Bindemittelsystem. Bevorzugt besteht das Bindemittelsystem aus zwei miteinander vernetzbaren Komponenten. Das Bindemittel soll in Mengen von nicht mehr als 5 Gew.-%, bezogen auf die kontinuierliche Phase, eingesetzt werden. Ein bevorzugtes Bindemittelsystem besteht aus Natrosol® Plus 331 der Frima Hercules oder einem Acrylpolymeren, beispielsweise Rohagit® KF 720 der Firma Röhm. Zur besseren Benetzung des Metallpulvers werden vorzugsweise Netzmittel, wie beispielsweise Sojalecithin der Fa. Langer und/oder Sulfinole der Fa.Biesterfeld, eingesetzt. Sofern das Bindemittel nur in untergeordneten Mengen eingesetzt wird, wird das Verhältnis von Sauerstoffatomen zu Kohlenstoffatomen in der kontinuierlichen Phase im wesentlichen nicht beeinflußt. Der mit dem Sojalecithin in die kontinuierliche Phase eingeführte Phosphor und der Stickstoff sind unschädlich, da Phosphor und Stickstoff zu den üblichen Dotierungssubstanzen von für Kondensatoren einsetzbare Tantalpulver gehören.

Das Bindemittelsystem wird bevorzugt so eingestellt, daß die Viskosität der Paste bei einer Schergeschwindigkeit von 10⁻⁴/sec zwischen 20 und 200 kPas beträgt.

Nach einer weiteren Ausführungsform der Erfindung kann die organische Verbindung auch eine feste Substanz sein. Geeignete bei Raumtemperatur feste organische Verbindungen sind Erythrit, Pentaerythrit, Pentite, Aldosen oder Ketosen mit 3 bis 6 Kohlenstoffatomen oder deren Mischungen. Ferner sind Zucker oder zuckerähnliche Verbindungen geeignet. Feste organische Verbindungen werden in Verbindung mit einem Lösungsmittel eingesetzt, wobei das Lösungsmittel bei Temperaturen bis 150°C verdampfen soll. Als Lösungsmittel geeignet sind beispielsweise Wasser, Ethanol, Propanol und kurzkettige Glycole.

Als Lösungsmittel geeignet sind ferner die genannten flüssigen organischen Verbindungen, soweit die festen organischen Verbindungen in diesen ausreichend löslich sind. Die festen organischen Verbindungen können demgemäß als Verdickungsmittel eingesetzt werden, wenn als Hauptkomponente der kontinuierlichen Phase flüssige organische Verbindungen eingesetzt werden.

Bei einem Verfahren zur Herstellung von drucklos gesinterten Refraktärmetallschichten wird eine Paste der genannten art auf ein Substrat aufgebracht, das gegebenenfalls vorhandene Lösungsmittel bei einer Temperatur unterhalb der Siedetemperatur des Lösungsmittel entzogen, und das Substrat anschließend im Hochvakuum auf Sintertemperatur aufgeheizt. Wesentlich ist, daß der Temperaturbereich, in dem sich die organische Verbindung zersetzt, mit einer geringen Aufheizgeschwindigkeit von vorzugsweise weniger als 10 K/min durchfahren wird. Vorzugsweise wird der Temperaturbereich von etwa 200°C bis etwa 400°C mit einer Aufheizgeschwindigkeit von weniger als 10 K/min durchfahren.

Bei Einsatz fester organischer Verbindungen, die in einem Lösungsmittel gelöst sind, wird die auf das Substrat aufgetragene Paste beim Entfernen des Lösungsmittels in eine trockene Pulverschicht (Grünstruktur) überführt, in der die Pulverteilchen durch die eingesetzte feste organische Verbindung miteinander verklebt sind und daher in ihrer Struktur stabilisiert sind.

Es hat sich ferner gezeigt, daß es vorteilhaft ist, die Paste, gegebenenfalls nach Entfernung des Lösungsmittels, noch einige Zeit, vorzugsweise etwa 10 bis 30 Minuten, bei einer Temperatur von 150 bis 200°C in sauerstoffhaltiger Atmosphäre, vorzugsweise Luft, zu halten. Offenbar sind die eingesetzten organischen Verbindungen dabei in der Lage, zusätzlichen Sauerstoff aufzunehmen oder zu binden, der für deren rückstandsfreie Zersetzung günstig ist.

Als Substrat, auf das das Refraktärmetallpulver aufgetragen wird, wird vorzugsweise Niob- oder Tantalblech eingesetzt. Bevorzugte Refraktärmetallpulver sind für die Kondensatorherstellung geeignete Niob- und/oder Tantalpulver-Agglomerate. Für die Kondensatorelektrodenherstellung sind als Substrate insbesondere Tantal- oder Niob-Folien einer Dicke von 50 bis 400 µm geeignet.

Der Auftrag der Paste auf das Substrat kann durch Siebdruck, Schablonendruck, Rakein, Tauchen oder Extrusion erfolgen.

Ein vorteilhaftes Verfahren zur Herstellung flächiger Tantal- oder Niob-Kondensatoranoden besteht darin, eine relativ großflächige Substratfolie durch eine Schablone, die 100 bis 1000 Ausschneidungen der gewünschten Elektrodenform und -fläche, beispielsweise 2 mm x 1mm, aufweist, mittels Schablonendruck mit der Paste zu beschichten und nach dem Sintern die Folie zu zerschneiden, so daß aus der Folie 100 bis 1000 Kondensatoranoden gewonnen werden.

Besonders bevorzugt wird die Substratfolie in Form eines Kammes ausgebildet, an dessen Zinkenspitzen je ein Sinterkörper aufgebracht wird. Der Rücken des Kammes kann dann vorteilhaft als Systemträger für eine Vielzahl von Anoden für die weitere Verarbeitung zu Kondensatoren fungieren.

Gegenstand der Erfindung ist auch eine Vielzahl von Anoden mit den in Auspruch, 8 genannten Merkmalen, bestehend aus einem kammartig ausgebildeten Trägerblech, wobei die Zinkenspitzen des Kammes jeweils einen Sinterkörper aus Erdsäuremetallpulver aufweisen.

Das erfindungsgemäße Anodendesign wird nachfolgend anhand der Fig. 1 bis 4 näher erläutert.
Fig. 1 zeigt eine durch Press-Sintern nach dem Stand der Technik hergestellte Anode.
Fig. 2 a bis c zeigt verschiedene Ausfühmngsformen erfindungsgemäßer Anoden.
Fig. 3 zeigt einen Anodenkamm nach dem Stand der Technik.
Fig. 4 zeigt einen erfindungsgemäßen Anodenkamm.

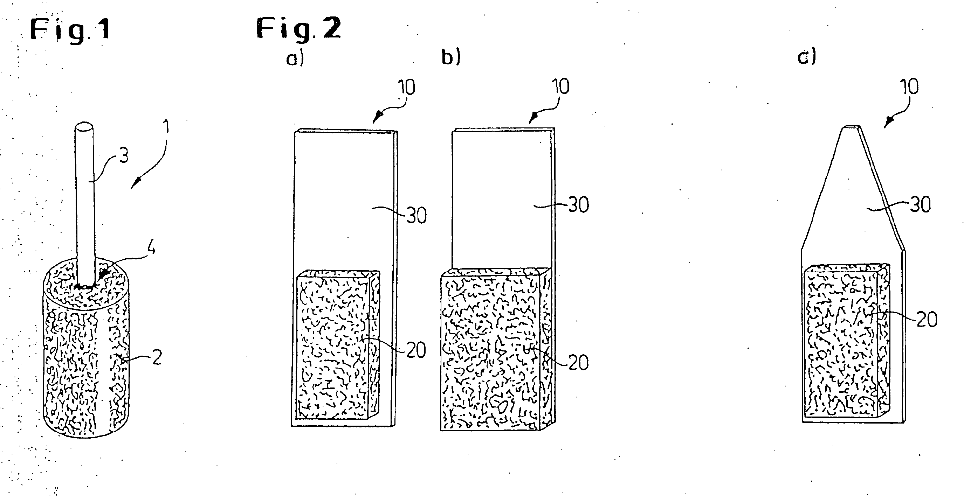

Die Anode 1 des Standes der Technik gemäß Fig. 1 besteht aus einem Sinterkörper 2, der durch Pressen und Sintern von in eine Matrize eingefülltem fließfähigen Pulver erzeugt wurde. An den Sinterkörper 2 ist mittels Schweißverbindung 4 der Zuleitungsdraht 3 angeschweißt.

Die erfindungsgemäßen Anoden 10 gemäß Fig. 2 bestehen aus einem durch Pastenauftrag auf das Trägerblech 30, Trocknen und druckloses Sintern erzeugten Sinterkörper 20. Dabei kann das Trägerblech 30 den flächigen Sinterkörper 20 allseitig überragen (a), oder nur in einer Richtung überragen (b), wobei auch beidseitig des Trägers ein Sinterkörper vorgesehen sein kann.

Fig. 2 c zeigt eine abweichende Form des Trägerbleches. In allen Fällen übernimmt der den Sinterkörper überragende Teil des Trägerbleches die Funktion des Zuleitungsdrahtes 3 (Fig. 1).

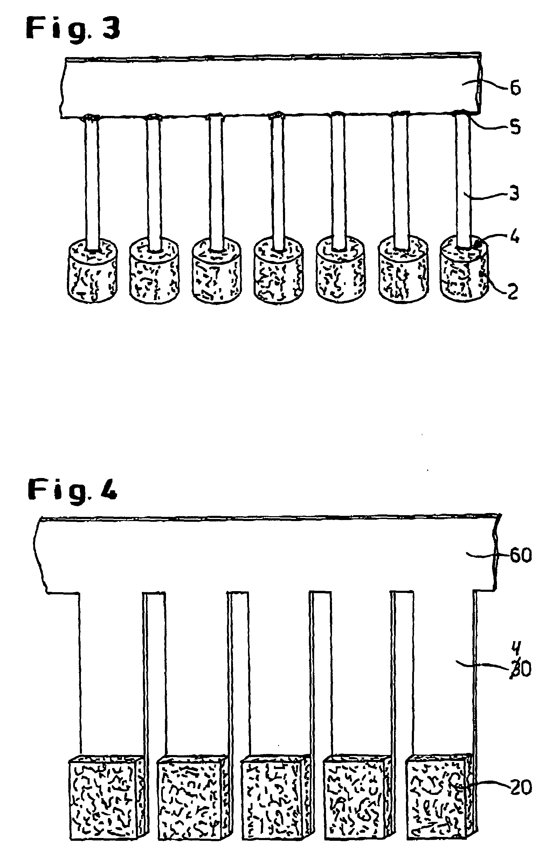

Fig. 3 zeigt einen Anodenkamm nach dem Stand der Technik, wobei die Sinterkörper 2 über den Zuleitungsdraht 3 mit Schweißverbindungen 4 und 5 mit dem Systemträgerblech 6 verbunden sind.

Bei dem erfindungsgemäßen Anodenkamm nach Fig. 4 entfallen die nach dem Stand der Technik erforderlichen Schweißverbindungen 4 und 5, da der Kammrücken 60, der den Systemträger bildet, und die Zinken 40, deren Spitzen die Sinterkörper 20 tragen, vor oder nach dem Pastenauftrag oder nach dem Sintern aus einem Stück Blech gebildet wurden.

Die Erfindung wird durch die nachfolgenden Beispiele erläutert, wobei die Beispiele 1 und 2 keine Ausführungsform der Erfindung darstellen, sondern deren Verständnis erleichtern %-Angaben sind Gewichtsprozente.

### Beispiel 1

77,6 % Ta-Pulver, bestehend aus Agglomeraten von Primärteilchen mit einer Agglomeratverteilung von d₁₀ = 2 µm, d₅₀ = 5 µm und d₉₀ = 26 µm nach Mastersizer, die visuell bestimmte mittlere Primärteilchengröße beträgt etwa 300 nm, die spezifische Oberfläche nach BET beträgt 0,77m²/g und die Schüttdichte 23,60 g/inch³, wurden mit 21,4 % Glycerin, 0,2 % Surfinol 420 (eine Mischung ethoxylierter Ethindiole der Fa. Air Products), 0,8 % Sojalecithin W250 der Fa. Langer und 0,02 % Rohagit KF720 (ein festes Acrylpolymer der Fa. Röhm) angerührt und mittels Dreiwalzwerk homogenisiert.

Nach 24 Stunden Ruhezeit wird die Viskosität mittels Rheometer der Fa. Bohlin Instruments (Meßsystem CP4°/20 Korrekt) bestimmt. Bei einer Schergeschwindigkeit von 10⁻⁴s⁻¹ betrug die Viskosität 28 kPas, bei 10⁻²s⁻¹ 109 Pas und bei 10 s⁻¹ 13 Pas (25°C).

### Beispiel 2

82,6 % Ta-Pulver, bestehend aus Agglomeraten von Primärteilchen mit einer Agglomeratverteilung von d₁₀ = 2 µm, d₅₀ = 5 µm und d₉₀ 26 µm nach Mastersizer, die visuell bestimmte mittlere Primärteilchengröße beträgt etwa 300 nm, die spezifische Oberfläche nach BET beträgt 0,77 m²/g und die Schüttdichte 23,60 g/inch³, wurden mit 16 % Tetraethylenglycol, 0,6 % Cellulose Natrosol Plus von der Fa. Hercules, 0,2 % Surfinol 420 (eine Mischung ethoxylierter Ethindiole der Fa. Air Products), 0,6 % Sojalecithin W250 der Fa. Langer angerührt und mittels Dreiwalzenwerk homogenisiert.

Nach 24 Stunden Ruhezeit wird die Viskosität mittels Rheometer der Fa. Bohlin Instruments (Meßsystem CP4°/20 Korrekt) bestimmt.

Bei einer Schergeschwindigkeit von 10⁻⁴s⁻¹ betrug die Viskosität 75 kPas, bei 10⁻²s⁻¹ 2 kPas und bei 10 s⁻¹ 5 Pas (25°C).

### Beispiel 3

Als Substrat dient mit Isopropylalkohol gewaschene Tantal-Folie einer Dicke von 150 µm. Auf die Ta-Folie wird eine Edelstahl-Schablone einer Dicke von 400 µm, die 550 rechteckige Ausschneidungen der Abmessung 1 mm mal 2 mm aufweist, aufgelegt. Anschließend wird eine Paste gemäß Beispiel 2 mittels einer Rakel in die Ausschneidungen gedrückt. Die mit gedruckten Strukturen versehene Ta-Folie wird 10 Minuten lang im Umluftofen behandelt. Anschließend wird im Sinterofen unter Hochvakuum mit einer Rate von 5 K/min auf 200°C, dann 2 K/min auf 400°C und 25 K/min auf 1300°C geheizt. Nach weiteren 30 min wird auf Raumtemperatur (<100°C) abgekühlt. Die Sinterdichte der Sinterstrukturen beträgt 4,2 g/cm³. Die Tantalfolie wurde zwischen den Sinterstrukturen in Einzelanodenstrukturen zerschnitten und bei 40 V formiert.

### Elektrischer Test:

An drei der derart hergestellten Anoden wurden elektrische Messungen durchgeführt: Es ergaben sich folgende Werte:

| Probe | Kapazität µ FV/g | Leckström nA/µFV |
|---|---|---|
| 1 | 43331 | 0,55 |
| 2 | 44857 | 0,56 |
| 3 | 44216 | 0,58 |

## Patentansprüche

1. Verfahren zur Herstellung von Anoden (10) für Elektrolytkondensatoren auf Basis gesinterter Erdsäuremetallpulver bestehend aus einem als elektrischer Kontakt ausgebildeten metallischen Trägerkörper und einem die Kondensatorfläche darstellenden, mit dem Trägerkörper verbundenen porösen Sinterkörper (20), wobei der Trägerkörper in Form eines Trägerbleches (30) ausgebildet ist, **dadurch gekennzeichnet, dass** eine Paste, bestehend aus 40 bis 92 Gew.-% eines Refraktärmetallpulvers als diskrete Phase und einer kontinuierlichen Phase, die im wesentlichen aus nur aus Kohlenstoff, Sauerstoff und Wasserstoff aufgebauten organischen Verbindungen, wobei das Verhältnis der Anzahl von Sauerstoffatomen zu Kohlenstoffatomen mindestens 0,5 beträgt, sowie gegebenenfalls einem unter 150°C verdampfenden Lösungsmittel besteht, wobei die kontinuierliche Phase zusätzlich ein Bindemittelsystem in einer Menge von bis zu 5 Gew.-%, bezogen auf die kontinuierliche Phase, enthält, auf das Trägerblech (30) aufgetragen und drucklos gesintert wird.

2. Verfahren nach Anspruch 1, **dadurch gekennzeichnet, dass** das gegebenenfalls vorhandene Lösungsmittel bei einer Temperatur, die unterhalb der Siedetemperatur des Lösungsmittels liegt, entfernt wird und das Trägerblech anschließend im Hochvakuum auf Sintertemperatur aufgeheizt wird, wobei das Aufheizen im Temperaturbereich von etwa 200 bis etwa 400°C mit einer Aufheizgeschwindigkeit von weniger 3 K/min erfolgt.

3. Verfahren nach Anspruch 2, **dadurch gekennzeichnet, dass** das mit der Paste beschichtete Trägerblech nach Entfernung des gegebenenfalls vorhandenen Lösungsmittels bei 150 bis 200°C in sauerstoffhaltiger Atmosphäre behandelt wird.

4. Verfahren nach Anspruch 2 oder 3, **dadurch gekennzeichnet, dass** als Trägerblech Niob- oder Tantalblech eingesetzt und als Refraktärmetallpulver für die Kondensatorherstellung geeignete Niob- und/oder Tantalpulver-Agglomerate eingesetzt werden.

5. Verfahren nach einem der Ansprüche 2 bis 4, **dadurch gekennzeichnet, dass** die Paste in Form von Flächenstrukturen mittels einer Schablone durch Rakeln auf das Trägerblech aufgebracht wird.

6. Anode (10) für Elektrolytkondensatoren auf Basis gesinterter Erdsäuremetallpulver bestehend aus einem als elektrischer Kontakt ausgebildeten metallischen Trägerkörper und einem die Kondensatorfläche darstellenden, mit dem Trägerkörper verbundenen porösen Sinterkörper (20), wobei der Trägerkörper in Form eines Trägerbleches (30) ausgebildet ist, erhältlich nach dem Verfahren gemäß eines der Ansprüche 1 bis 5.

7. Anode nach Anspruch 6, wobei das Blech den Sinterkörper in zumindest einer Richtung überragt.

8. Vielzahl von über einen gemeinsamen elektrischen Kontakt verbundenen Anoden für Elektrolytkondensatoren auf Basis gesinterter Erdsäuremetallpulver, wobei der gemeinsame elektrische Kontakt in Form eines kammartig ausgebildeten Metallbleches ausgebildet ist und auf den Zinken (40) des Kammes die die Kondensatorelektrodenfläche bildenden Sinterkörper (20) aufgesintert sind, erhältlich nach dem Verfahren gemäß eines der Ansprüche 1 bis 5.

9. Anode nach einem der Ansprüche 6 bis 8, wobei das Blech bzw. der Zinken ein Querschnittsverhältnis von mindestens 1:5 aufweist.

10. Anode nach einem der Ansprüche 6 bis 9, wobei das Trägerblech eine Dicke von 30 bis 500 µm, vorzugsweise 40 bis 300 µm, aufweist.

11. Anode nach einem der Ansprüche 6 bis 10, wobei der poröse Sinterkörper eine Fläche von 0,5 bis 100 mm², vorzugsweise 2 bis 40 mm² des Trägerbleches bedeckt.

12. Anode nach einem der Ansprüche 6 bis 11, wobei der Sinterkörper eine Dicke von 0,1 bis 2 mm, vorzugsweise 0,3 bis 1 mm, hat.

## Claims

1. Process for producing anodes (10) for electrolytic capacitors based on sintered acidic earth metal powders consisting of a metallic carrier body constructed as an electrical contact and a porous sintered body (20) which constitutes the capacitor surface and is connected to the carrier body, wherein the carrier body is constructed in the form of a carrier metal sheet (30), **characterized in that** a paste consisting of 40% to 92% by weight of a refractory metal powder as a discrete phase and a continuous phase which consists essentially of organic compounds constructed only of carbon, oxygen and hydrogen, the ratio of the number of oxygen atoms to carbon atoms being at least 0.5, and also optionally a solvent which evaporates below 150°C, the continuous phase additionally containing a binder system in an amount of up to 5% by weight, based on the continuous phase, is applied to the carrier metal sheet (30) and sintered pressurelessly.

2. Process according to Claim 1, **characterized in that** the optional solvent, if present, is removed at a temperature which is below the boiling temperature of the solvent and the carrier metal sheet is subsequently heated in a high vacuum to the sintering temperature, the heating being effected at a heating rate of less than 3 K/min in the temperature range from about 200 to about 400°C.

3. Process according to Claim 2, **characterized in that** the carrier metal sheet coated with the paste is treated in an oxygenic atmosphere at 150 to 200°C after the removal of any solvent present.

4. Process according to Claim 2 or 3, **characterized in that** the carrier metal sheet used is niobium or tantalum sheet and the refractory metal powder used comprises niobium and/or tantalum powder agglomerates suitable for capacitor production.

5. Process according to any one of Claims 2 to 4, **characterized in that** the paste is applied to the carrier metal sheet in the form of sheetlike structures by doctor-blade coating through a stencil.

6. Anode (10) for electrolytic capacitors based on sintered acidic earth metal powder consisting of a metallic carrier body constructed as an electrical contact and a porous sintered body (20) which constitutes the capacitor surface and is connected to the carrier body, wherein the carrier body is constructed in the form of a carrier metal sheet (30), obtainable according to the process as per any one of Claims 1 to 5.

7. Anode according to Claim 6, wherein the metal sheet projects beyond the sintered body in one or more directions.

8. Multiplicity of anodes, connected via a common electrical contact, for electrolytic capacitors based on sintered acidic earth metal powders, wherein the common electrical contact is constructed in the form of a comblike metal sheet and the sintered bodies (20) forming the capacitor electrode surface have been sintered onto the teeth (40) of the comb, obtainable according to the process as per any one of Claims 1 to 5.

9. Anode according to any one of Claims 6 to 8, wherein the metal sheet or the teeth has a cross-sectional ratio of at least 1:5.

10. Anode according to any one of Claims 6 to 9, wherein the carrier metal sheet is from 30 to 500 µm and preferably from 40 to 300 µm in thickness.

11. Anode according to any one of Claims 6 to 10, wherein the porous sintered body covers a carrier metal sheet area of 0.5 to 100 mm² and preferably 2 to 40 mm².

12. Anode according to any one of Claims 6 to 11, wherein the sintered body is from 0.1 to 2 mm and preferably from 0.3 to 1 mm in thickness.

## Revendications

1. Procédé pour la fabrication d'anodes (10) pour condensateurs à électrolytes à base de poudres de métaux terreux frittés consistant en un corps de support métallique qui assure le contact électrique et un corps fritté poreux (20) associé au corps de support et représentant la surface de condensateur, le corps de support étant constitué d'une tôle de support (30), **caractérisé en ce que** l'on applique sur la tôle de support (30) et on fritte sans application de pression une pâte consistant en 40 à 92 % en poids d'une poudre de métal réfractaire formant une phase séparée et une phase continue, laquelle consiste essentiellement en composés organiques constitués uniquement de carbone, d'oxygène et d'hydrogène, le rapport du nombre des atomes d'oxygène au nombre des atomes de carbone étant d'au moins 0,5, et le cas échéant un solvant vaporisant au-dessous de 150°C, la phase continue contenant en outre un système liant en quantité pouvant aller jusqu'à 5 % de son poids.

2. Procédé selon la revendication 1, **caractérisé en ce que** le solvant éventuel est éliminé à une température inférieure à sa température d'ébullition après quoi on chauffe la tôle de support sous haut vide à la température de frittage, le chauffage étant réalisé dans l'intervalle de température d'environ 200 à environ 400°C avec une vitesse de réchauffage inférieure à 3 K/min.

3. Procédé selon la revendication 2, **caractérisé en ce que** la tôle de support revêtue de la pâte, après élimination du solvant éventuel, est traitée en atmosphère contenant de l'oxygène à une température de 150 à 200°C.

4. Procédé selon la revendication 2 ou 3, **caractérisé en ce que** l'on utilise en tant que tôle de support une tôle de niobium ou de tantale et en tant que poudres de métal réfractaire pour la fabrication du condensateur, des agglomérats appropriés de poudres de niobium et/ou de tantale.

5. Procédé selon l'une quelconque des revendications 2 à 4, **caractérisé en ce que** la pâte est appliquée sur la tôle de support sous la forme de structures superficielles par application à la racle à l'aide d'un pochoir.

6. Anode (10) pour condensateurs à électrolytes à base de poudres de métaux terreux frittés consistant en un corps de support métallique assurant le contact électrique et un corps fritté poreux (20) associé au corps de support et constituant la surface du condensateur, le corps de support étant en forme de tôle de support (30), obtenue par le procédé selon l'une des revendications 1 à 5.

7. Anode selon la revendication 6, dans laquelle la tôle dépasse le corps fritté dans au moins une direction.

8. Ensemble d'anodes multiples, associées à un contact électrique commun, pour condensateur à électrolytes, à base de poudres de métaux terreux frittés, le contact électrique commun étant assuré par une tôle métallique en forme de peigne sur les dents (40) duquel on a fritté les corps frittés (20) constituant la surface d'électrode du condensateur, obtenu par le procédé selon l'une des revendications 1 à 5.

9. Anode selon l'une des revendications 6 à 8, dans laquelle le rapport entre la section de la tôle et la section des dents est d'au moins 1:5.

10. Anode selon l'une des revendications 6 à 9, dans laquelle la tôle de support a une épaisseur de 30 à 500 µm, de préférence de 40 à 300 µm.

11. Anode selon l'une des revendications 6 à 10, dans laquelle le corps fritté poreux recouvre une surface de 0,5 à 100 mm², de préférence de 2 à 40 mm², de la tôle de support.

12. Anode selon l'une des revendications 6 à 11, dans laquelle le corps fritté a une épaisseur de 0,1 à 2 mm, de préférence de 0,3 à 1 mm.
